# FASCICULE DE BREVET EUROPEEN

(11) **EP 3 785 316 B1**
(45) Date de publication et mention de la délivrance du brevet: **26.10.2022**
(21) Numéro de dépôt: 19726059.9
(22) Date de dépôt: 23.04.2019
(51) Int. Cl.: H01M 4/14, H01M 4/16, H01M 4/68, H01M 10/04, H01M 10/20, H01M 10/22, H01M 4/02

(54) **CELLULE ÉLECTROCHIMIQUE À CAPACITÉ ÉLEVÉE ET À FAIBLE AUTO-DÉCHARGE**
ELEKTROCHEMISCHE ZELLE MIT HOHER KAPAZITÄT UND NIEDRIGER SELBSTENTLADUNG
ELECTROCHEMICAL CELL WITH HIGH CAPACITY AND LOW SELF-DISCHARGE

(30) Priorité: 24.04.2018 FR 1853593
(43) Date de publication de la demande: 03.03.2021
(73) Titulaire: Esther : Energie Sciences Thermodynamiques, 74250 Viuz-en-Sallaz (FR)
(72) Inventeur: BIENVENU, Gérard, 74250 VIUZ-EN-SALLAZ (FR)
(74) Mandataire: Brevalex
(86) Numéro de dépôt international: PCT/FR2019/050961
(87) Numéro de publication internationale: WO 2019/207248

(56) Documents cités:
- DE-A1- 2 504 284
- FR-A- 692 917
- FR-A- 724 535
- FR-A- 817 785
- FR-A1- 3 002 696
- GB-A- 319 400
- US-A- 2 023 717
- US-A- 2 582 845

## Description

### DOMAINE TECHNIQUE

L'invention concerne une cellule électrochimique, et plus particulièrement, une cellule électrochimique ayant une électrode positive comprenant un oxyde métallique, tel que l'oxyde de plomb ou l'oxyde d'étain, et une électrode négative comprenant un alliage de métaux, tel qu'un alliage à base de cadmium, par exemple Cd/Ni ou Cd/Cu.

La cellule selon l'invention présente une forte capacité et une faible autodécharge.

L'invention concerne également un procédé de charge et un procédé de décharge d'une telle cellule.

L'invention concerne également un ensemble comprenant une telle cellule et un électrolyte aqueux.

L'invention trouve notamment des applications dans le stockage massif de l'énergie électrique.

### ÉTAT DE LA TECHNIQUE ANTÉRIEURE

Le stockage massif de l'énergie électrique présente des enjeux considérables. Il est, en effet, essentiel d'avoir des unités de stockage ayant de fortes capacités tout en privilégiant les aspects volumiques réduits. Une voie prometteuse pour stocker de telles énergies est la voie électrochimique.

Les batteries électrochimiques permettent de stocker de l'énergie électrique et de la restituer au moment choisi. Cependant, elles restent limitées en termes de capacité d'énergie et ont des coûts d'investissement élevés. En outre, elles ont généralement une durée de vie limitée à un certain nombre de cycles ne dépassant pas 1000 à 2000 cycles en utilisation intense. Il est possible d'augmenter ce nombre de cycles en ne déchargeant pas complètement la batterie. Par exemple, si on ne décharge une batterie au plomb que de 30 %, on peut opérer un nombre de cycles supérieur à 5000.

Les dernières batteries apparues sur le marché sont les batteries au lithium qui ont la plus forte énergie spécifique. Cette forte énergie spécifique est due à la grande réactivité du lithium. L'oxydation d'un gramme de lithium dégage 22,5Wh alors que celle du zinc n'en dégage que 1,4Wh. Cependant, la réactivité du lithium est, également, un inconvénient d'un point de vue sécurité. En effet, au-delà d'une certaine capacité, ces batteries peuvent exploser avec inflammation et formation d'hydroxyde de lithium corrosif et toxique. Il est donc difficile d'imaginer des systèmes reposant sur l'emploi du lithium pour stocker des quantités importantes d'électricité. En outre, le lithium requiert la mise en place d'unités de très fortes puissances pour pouvoir délivrer des quantités d'électricité importantes par exemple 100MW pour 130MWh.

Les autres batteries sont plus sûres mais elles ont des capacités limitées. Les batteries au plomb sont celles qui sont les plus utilisées dans les applications fixes même si leur nombre de cycles est limité.

Dans les batteries au plomb, l'électrode positive est en plomb et/ou en oxyde de plomb. Plusieurs matériaux peuvent être utilisés pour l'électrode négative. Par exemple, comme décrit par Jean Besson dans le chapitre «Piles et Accumulateurs. Electrolyse» de la collection «Que sais-je ?» des Presses Universitaires de France (n° 437

L'électrochimie, 1962, pages 103-107) ou encore dans l'article de Leung et al. ("High-potential zinc-lead dioxide rechargeable cells", Electrochimica Acta, 79, 2012, 117-125), une électrode de plomb peut être utilisée en association avec une électrode négative de zinc.

L'électrolyte aqueux contient du sulfate de zinc qui, lors de la charge, va former du zinc, sur l'électrode négative, et de l'acide sulfurique suivant une réaction du type : PbO + H₂O + ZnSO₄ → PbO₂ + H₂SO₄ + Zn.

Cependant, l'électrode de zinc est très instable en milieu acide sulfurique. A partir d'une certaine concentration en acide dans l'électrolyte, par exemple au-delà de 80g/L, le zinc est attaqué par l'acide, conduisant à un dégagement de dihydrogène et à une baisse de rendement suivant la réaction : Zn + H₂SO₄ → ZnSO₄ + H₂. Les couples d'électrodes Pb+Zn sont donc généralement utilisés en milieu très dilué en acide, ce qui a pour conséquence de diminuer la densité énergétique de l'électrolyte (limitée au maximum à une centaine de Wh/litre, typiquement environ 80Wh/litre). De plus, pour les couples d'électrodes Pb+Zn, en milieu acide sulfurique, l'électrolyte doit circuler pour éviter la formation de dendrites de zinc qui provoquent des courts-circuits. Il est également nécessaire de retirer l'électrolyte pendant les phases d'inutilisation de la batterie pour mettre les électrodes au « sec » et éviter l'autodécharge de la batterie.

Il n'existe donc actuellement pas de systèmes électrochimiques performants et fiables, capables de stocker de l'énergie électrique en quantité massive et de la restituer avec un bon rendement.

### EXPOSÉ DE L'INVENTION

C'est, par conséquent, un but de la présente invention de proposer une cellule électrochimique pouvant stocker de grandes quantités d'énergie, ayant de bons rendements et présentant une très faible autodécharge.

Ce but est atteint, selon l'invention, par une cellule électrochimique qui, à l'état chargé, comprend une électrode positive, un électrolyte aqueux et une électrode négative, l'électrode positive comprenant un oxyde métallique, l'électrode négative comprenant un support et un matériau actif,
le matériau actif de l'électrode négative est un alliage de métaux choisi parmi un alliage à base de cuivre, un alliage à base de cadmium, un alliage à base de nickel, un alliage à base de manganèse, ou un alliage à base de cadmium et d'étain,
l'électrolyte comprenant de l'acide sulfurique et un matériau actif dissous, sous la forme de sulfates des métaux formant l'alliage du matériau actif de l'électrode négative, la concentration en acide sulfurique étant supérieure à 100g/L, la concentration en matériau actif dissous allant de 0 à 400g/L, et de préférence de 0 à 200g/L.

Par état chargé, on entend que la cellule présente un état de charge d'au moins 50%.

Par électrode positive, on entend l'électrode qui joue le rôle de cathode (soit, en d'autres termes, qui est le siège d'une réduction), quand le dispositif est en processus de décharge et qui joue le rôle d'anode (soit, en d'autres termes, qui est le siège d'une oxydation), lorsque le dispositif est en processus de charge.

Par électrode négative, on entend l'électrode qui joue le rôle de l'anode quand le dispositif est en processus de décharge et qui joue le rôle de cathode lorsque le dispositif est en processus de charge.

Par alliage à base d'un métal, on entend que l'alliage comprend au moins 90% massique de ce métal, de préférence, au moins 95% massique, et encore plus préférentiellement au moins 97% massique. Par exemple, dans un alliage de cadmium contenant du nickel, le nickel représente 5% massique ou moins de 5% massique de l'alliage. Les phases intermétalliques obtenues, comme par exemple Cd₅Ni sont stables.

Par alliage à base de cadmium et d'étain, on entend que l'alliage comprend au moins 90% massique d'étain et de cadmium, de préférence, au moins 95%.

Par oxyde métallique, on entend un oxyde d'un métal, un oxyde d'un alliage métallique ou un mélange de différents oxydes de métaux, le ou les métaux ayant plusieurs degrés d'oxydation. Avantageusement, l'électrode métallique comprend l'oxyde métallique et un métal, de préférence, le même que celui présent dans l'oxyde métallique. Par exemple, on utilise une électrode positive PbO₂/Pb.

Le stockage de l'énergie est basé sur l'électrolyse des métaux non ferreux en milieu aqueux et, plus particulièrement, sur l'électrolyse des métaux qui ont un grand contenu énergétique. Lors de la charge, le matériau actif, par exemple, un métal M, est déposé sur l'électrode négative.

Dans le cas où le matériau actif de l'électrode positive est en oxyde de plomb, lors de la charge, l'oxyde de plomb de degré II est oxydé en oxyde de plomb de degré IV. La réaction globale de la charge est : PbO + MSO₄ + H₂O → PbO₂ + M + H₂SO₄

De manière surprenante et inattendue, il a été observé que lorsque l'espèce oxydée, présente à la positive, est le PbO₂, il se forme lors de sa réduction un oxysulfate de degré 2 et de formule (PbSO₄)ₓ; (PbO)_{y} avec le rapport x/y ayant des valeurs allant de 1 à 0,25.

Lors de la décharge, il y a dissolution du matériau actif et réduction de l'électrode de plomb selon la réaction inverse de celle de la charge.

La cellule électrochimique de l'invention a de fortes densités d'énergie, supérieures à 100Wh/litre d'électrolyte, ce qui est supérieur aux densités d'énergie pouvant être atteintes pour une cellule électrochimique avec une électrode de zinc (généralement 80Wh/litre maximum avec des rendements limités) ou avec des systèmes rédox autour de 20Wh/l.

Comme les capacités massiques (matériau d'électrode négative à fortes capacités) et volumique (forte concentration en acide sulfurique) de la batterie sont élevées, il est possible d'avoir une cellule électrochimique avec un volume de l'électrolyte réduit. Cela est particulièrement intéressant pour les systèmes embarqués.

De plus, les dépôts obtenus avec de tels matériaux actifs présentent une bonne tenue mécanique et sont homogènes. On n'observe pas de dendrite, comme c'est le cas, par exemple pour les dépôts de zinc.

Finalement, l'invention est particulièrement avantageuse puisque de telles cellules présentent de très bons rendements.

Avantageusement, l'autodécharge de la cellule est inférieure à 1% en masse du matériau actif de l'électrode négative sur une période de 24h, de préférence inférieure à 0,5% en masse, et, encore plus préférentiellement, inférieure à 0,05% en masse. L'autodécharge est très faible, les électrodes n'ont pas besoin d'être retirées quand la cellule électrochimique est inutilisée. La cellule peut être utilisée pour des systèmes embarqués, comme pour le transport par exemple.

De tels dispositifs électrochimiques sont performants et sûrs, il n'y a pas de risques d'explosion.

De tels dispositifs électrochimiques peuvent fonctionner sur un très grand nombre de cycles (typiquement plus de 2000).

Avantageusement, les alliages comprennent, en outre des métaux précités (Cu, Cd, Sn, Ni, Mn, Cd/Sn, Zn), un ou plusieurs éléments choisis parmi le nickel, le manganèse, l'étain, le cuivre, le cobalt, le fer, le zinc, le plomb et le cadmium, de préférence jusqu'à 10% massique, et encore plus préférentiellement, jusqu'à 5% massique, et de manière encore plus préférentiellement jusqu'à 3% massique.

Avantageusement, le matériau actif de l'électrode négative est un alliage à base de cadmium, ou un alliage à base de cadmium et d'étain et la concentration en acide sulfurique est supérieure ou égale à 220g/L, et de préférence, supérieure ou égale à 300g/L en fin de charge. Avec de tels matériaux actifs, il est possible d'utiliser de fortes concentrations d'acide sulfurique, ce qui permet d'augmenter la capacité de la cellule (jusqu'à 500 Wh/L d'électrolyte).

Avantageusement, le support de l'électrode négative est du cuivre qui est un bon conducteur électrique et bon marché. L'aluminium convient également, et peut être soumis, avant son utilisation, à un traitement de surface destiné à favoriser l'accrochage du Cadmium ou de l'alliage.

Avantageusement, le matériau actif de l'électrode négative est un alliage à base de cadmium, ou un alliage à base de cadmium et d'étain et le rapport massique entre la masse de matériau actif de l'électrode positive et la masse de matériau actif de l'électrode négative va de 1,5 à 3, et de préférence, de 2 à 2,5. Les capacités d'énergie des deux électrodes sont équilibrées, il y a peu de matière inutilisée.

Avantageusement, le matériau actif de l'électrode négative est un alliage à base de cuivre et le rapport massique entre la masse de matériau actif de l'électrode positive et la masse de matériau actif de l'électrode négative va de 3 à 6, et de préférence, de 3,5 à 5. Les capacités d'énergie des deux électrodes sont équilibrées, il y a peu de matière inutilisée.

Avantageusement, la cellule électrochimique comprend au moins un réservoir externe pour l'électrolyte, pour augmenter la quantité de réactifs mis en jeu dans les réactions de charge et de décharge, et ainsi accroître la capacité de la batterie.

Avantageusement, la cellule électrochimique comprend un dispositif de circulation pour faire circuler l'électrolyte entre le réservoir externe et la cellule électrochimique, ce qui facilite les échanges et les réactions.

Avantageusement, la cellule électrochimique comprend un dispositif d'agitation.

Avantageusement, le matériau actif de l'électrode positive est de l'oxyde de plomb mixte de formule PbₓSn_{y}O_{z}, avec x>0, y≥0 et z>0, avec x, y et z des nombres entiers ou non entiers. D'autres oxydes peuvent être ajoutés tels que par exemple CaO, MnO₂, voire des oxydes des métaux de la colonne IV A de la classification périodique des éléments.

Selon une autre variante de réalisation, le matériau actif de l'électrode positive est de l'oxyde d'étain.

L'invention concerne également un procédé de préparation d'une cellule électrochimique chargée telle que définie précédemment, le procédé comprenant au moins les étapes successives suivantes :
- fourniture d'une cellule électrochimique non chargée comprenant une électrode positive comprenant un matériau actif à base de plomb, et un support d'électrode négative,
- remplissage de la cellule électrochimique avec un électrolyte aqueux comprenant de l'acide sulfurique et le matériau actif de l'électrode négative dissous, sous forme de sulfate, la concentration en acide sulfurique allant de 0 à 150g/L, de préférence de 0 à 50g/L, et encore plus préférentiellement de 40 à 50g/L, la concentration en matériau actif dissous étant supérieure à 50g/L,
- réalisation de la charge de la cellule électrochimique, par exemple en appliquant une intensité de charge entre les électrodes positive et négative, de manière à électro-déposer le matériau actif sur le support de l'électrode négative et à former de l'acide sulfurique.

Des rendements énergétiques élevés, notamment supérieurs à 80%, ont pu être observés lors des cycles de charge/décharge. Cette amélioration est également obtenue par 'élévation de température. Par ailleurs peu ou pas de sulfates de plomb sont produits des cycles de charge/décharge.

Avantageusement, le matériau actif de l'électrode négative est un alliage à base de cadmium, ou un alliage à base de cadmium et d'étain et la concentration en matériau actif dissous est supérieure à 150g/L, de préférence supérieure à 200g/L et encore plus préférentiellement supérieure ou égale à 250g/L.

Les alliages peuvent être, avantageusement, déposés, préalablement, sur l'électrode négative, sous forme métallique en quantité suffisante pour obtenir la capacité voulue. Ce mode opératoire permet de limiter la quantité d'ions sulfates présente dans la cellule électrochimique au démarrage, et qui peut diminuer la solubilité du ou des métaux dans l'électrolyte.

L'invention concerne également un procédé de décharge d'une cellule électrochimique telle que décrite précédemment, le procédé comprenant au moins les étapes successives suivantes :
- fourniture de la cellule électrochimique chargée, le support de l'électrode négative étant du cuivre, le matériau actif de l'électrode négative étant un alliage à base de cadmium, un alliage à base de zinc, ou un alliage à base de cadmium et d'étain,
- décharge de la cellule électrochimique, le potentiel fourni par la cellule électrochimique lors de la décharge correspondant à celui du matériau actif de l'électrode négative, le matériau actif étant progressivement consommé lors de la décharge,
et à la fin de la décharge, le matériau actif étant totalement consommé, le potentiel de la cellule électrochimique chute du potentiel du matériau actif de l'électrode négative au potentiel du cuivre.

Par le potentiel fourni par la cellule électrochimique lors de la décharge correspond à celui du matériau actif de l'électrode négative, on entend que le potentiel correspond au potentiel de décharge de l'électrode négative, additionné en valeur absolue de celui de l'oxydation de l'électrode positive, ce qui correspond aux potentiels de réduction de la positive et d'oxydation de la négative.

Avec une telle association, il est aisé de déterminer quand la cellule électrochimique est complètement déchargée, c'est-à-dire, ici, quand tout le matériau actif de l'électrode négative est consommé, par la chute brutale de potentiel. La charge de la négative est ajustée de manière à ce que celle de la positive lui soit toujours supérieure d'au moins 10% et de préférence 20%.

L'invention concerne également un ensemble («kit») comprenant un électrolyte aqueux et une cellule électrochimique à l'état chargé, tels que décrits précédemment.

### BRÈVE DESCRIPTION DES DESSINS

La présente invention sera mieux comprise sur la base de la description qui va suivre et des dessins en annexe sur lesquels :
- la figure 1 représente, de manière schématique, en coupe et vue de profil, un générateur électrochimique comprenant plusieurs cellules électrochimiques selon un premier mode de réalisation particulier de l'invention,
- les figures 2a et 2b sont des clichés photographiques d'un dépôt d'un alliage de cuivre et de nickel, réalisé avec circulation d'électrolyte, et d'un alliage de cadmium et de cuivre, réalisé sans circulation d'électrolyte, respectivement, selon différents modes de réalisation de l'invention ;
- la figure 2c est un cliché photographique d'un dépôt de cadmium seul sur un support d'électrode,
- la figure 3 est une courbe représentant l'intensité et la tension en fonction du temps lors de la décharge d'une cellule électrochimique selon un autre mode de réalisation particulier de l'invention, l'électrode négative de la cellule comprenant un support en cuivre et un alliage de cadmium comme matériau actif,
- la figure 4 est une courbe représentant l'intensité et la tension lors des cycles de charge et de décharge, d'une cellule électrochimique selon un autre mode de réalisation particulier de l'invention, le matériau actif de l'électrode négative de la cellule étant un alliage de cadmium avec 2% massique de cuivre,
- la figure 5 est une courbe représentant le rendement d'une cellule électrochimique en fonction de la température, le matériau actif de l'électrode négative de la cellule étant du cadmium pur,
- la figure 6 est une courbe représentant la tension en fonction de l'intensité d'une cellule électrochimique selon un autre mode de réalisation particulier de l'invention, le matériau actif de l'électrode négative de la cellule étant un alliage contentant du cuivre et 1% de nickel,
- la figure 7 est un graphique représentant une courbe de décharge en fonction du temps (en secondes) d'une cellule ayant une électrode négative dont le matériau actif est un alliage de cadmium et de nickel à 1% massique, pour 50Wh, selon un mode de réalisation particulier de l'invention,
- la figure 8A est un graphique représentant la décharge en fonction du temps pour une électrode négative en alliage de cuivre avec 1% massique de nickel, pour une charge de 30 min à 0.7 A (soit environ 3.1 A/dm₂), selon un autre mode de réalisation particulier de l'invention,
- la figure 8B est un graphique représentant la décharge en fonction du temps pour une électrode négative en cuivre, pour une charge de 30 min à 2,19 A (soit environ 3.1 A/dm²),
- la figure 9 est un graphique représentant la décharge d'une cellule électrochimique de 2dm² en fonction du temps pour une électrode négative en alliage de cuivre avec 1% massique de nickel.

### EXPOSÉ DÉTAILLÉ DE MODES DE RÉALISATION PARTICULIERS

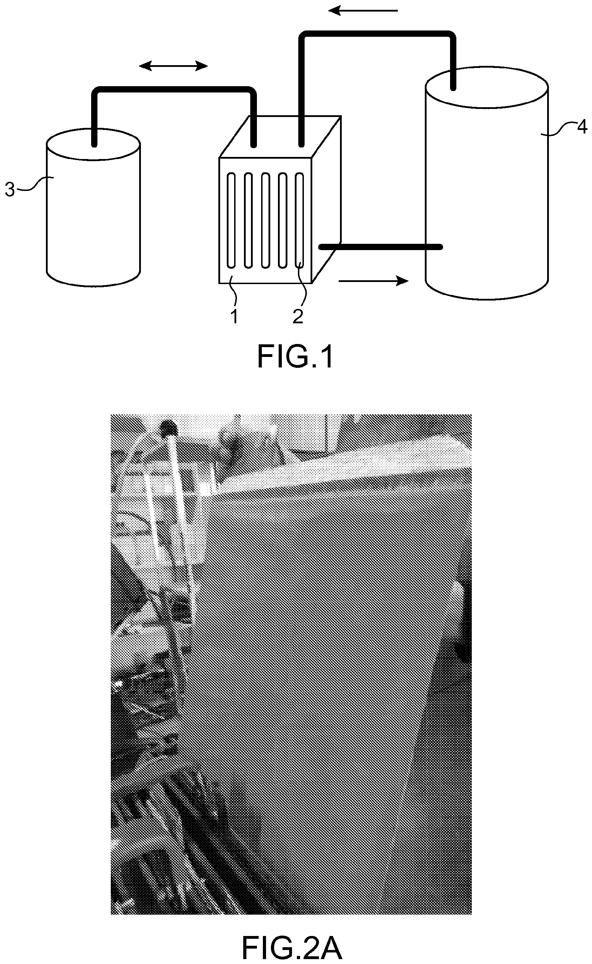

On se réfère tout d'abord à la figure 1 qui représente un générateur électrochimique 1 rechargeable, aussi appelé réacteur de stockage massif de l'électricité, ou encore dispositif électrochimique pour le stockage de l'énergie. Le générateur électrochimique 1 comprend au moins une cellule électrochimique 2, aussi appelée cellule élémentaire. Chaque cellule électrochimique 2 comprend une électrode positive, un électrolyte et une électrode négative. Les électrodes et l'électrolyte sont disposés dans un compartiment, avantageusement inerte chimiquement vis-à-vis de l'électrolyte, étanche et électriquement isolant. Le compartiment est, par exemple, en polymère. Le générateur électrochimique 1 peut comporter plusieurs cellules électrochimiques, avantageusement, connectées en série. Par exemple, sur la figure 1, il y a cinq cellules électrochimiques 2 représentées schématiquement. Le nombre de cellules électrochimiques sera choisi par l'homme du métier en fonction des applications visées. Chaque cellule 2 comprend également des collecteurs de courant et des contacts électriques, reliés aux électrodes, non représentés sur la figure 1.

### Electrode positive :

L'électrode positive comprend un matériau actif et, éventuellement, un support électriquement conducteur sur lequel est formé le matériau actif.

Le support est, par exemple, en acier inoxydable ou en plomb.

De manière particulièrement, le support de l'électrode positive est sous forme filaire, plus particulièrement sous forme d'une pelote, et notamment d'une pelote en plomb. La pelote peut être compactée de manière à emprisonner une phase oxydée pulvérulente et à établir avec ladite phase un maximum de contact.

L'électrode positive peut également être plane (par exemple par compression de la pelote) ou tubulaire.

Le matériau actif de l'électrode positive comprend un oxyde métallique, éventuellement associé avec le ou les métaux de l'oxyde. Le ou les métaux de l'oxyde ont plusieurs degrés d'oxydation. Le matériau actif de l'électrode positive peut comprendre plusieurs oxydes métalliques.

Selon un mode de réalisation avantageux, l'électrode positive peut comprendre un matériau à base de plomb. Par à base de plomb, on entend du plomb métallique et/ou un alliage de plomb et/ou un oxyde de plomb et/ou ou un oxyde d'un alliage de plomb. Par alliage de plomb, on entend que l'alliage comprend majoritairement en masse du plomb. L'alliage peut comprendre, en outre, un ou plusieurs métaux choisi parmi Sn, Bi, ou Mn. Il s'agit, par exemple, d'une électrode positive de formule PbₓSn_{y}O_{z}, avec x>0, y≥0 et z>0, avec x, y et z pouvant être des nombres entiers ou non.

Lorsque la cellule est à l'état chargé, le matériau actif est la phase oxydée, du plomb de degré IV. Le PbO₂ est en surface de l'électrode. Le plomb ou l'alliage de plomb joue le rôle de support et de conducteur.

Lors de la charge, le plomb ou l'alliage de plomb joue le matériau actif car il s'oxyde pour former l'oxyde de plomb.

De manière avantageuse, l'électrode comprend du plomb, ou un alliage binaire ou ternaire de plomb (Pb-Sb, Pb-Sn par exemple) recouvert par de l'oxyde de plomb PbO₂. On note, par la suite, ce type d'électrode PbO₂/Pb.

Selon un autre mode de réalisation, l'électrode positive comprend un ou plusieurs oxydes d'étain.

L'électrode présente, de préférence, une grande surface active. Elle est, avantageusement poreuse. Elle peut être par exemple sous la forme d'une mousse ou d'une laine de plomb. Plus particulièrement, il s'agit par exemple d'une électrode de plomb, ou d'un alliage de plomb, ayant une structure alvéolaire et dont les alvéoles sont remplies d'une pâte poreuse de PbO₂.

L'électrode peut être achetée dans le commerce Elle peut être oxydée «in situ», par réaction électrochimique lors de la charge de la cellule électrochimique 2.

### Electrode négative :

L'électrode négative est formée d'un support électriquement conducteur et d'un matériau actif. Le support peut être de même nature ou de nature différente du matériau actif. Le support peut être, par exemple, en titane, en plomb, en cadmium, en cuivre, en aluminium, en acier inoxydable. Par exemple, l'électrode négative peut comprendre un support en cadmium sur lequel est déposé du cadmium, on parlera alors de cadmium massif. Selon un autre exemple, le support sur lequel est déposé le cadmium est en cuivre. Le support de l'électrode négative peut également être en titane. Ce dernier est particulièrement intéressant d'une part pour ses propriétés mécaniques, et d'autre part par son aptitude à la passivation. Cette aptitude à la passivation du titane permet notamment, sous polarisation anodique, de limiter, voire interdire, la circulation d'un courant. Ainsi dès lors qu'une dissolution intégrale du matériau actif de l'électrode négative en titane est requise, la passivation de cette dernière permettra l'arrêt de l'alimentation délivrée par la cellule et la mettra en sécurité.

L'électrode négative peut être plane ou tubulaire.

De manière particulièrement avantageuse, le support de l'électrode négative peut présenter une surface non plane, en particulier une surface ondulée, de manière augmenter la surface spécifique de l'électrode négative. Par « plomb », on entend également oxyde de plomb.

Dans un premier mode de réalisation, le matériau actif de l'électrode négative est du cadmium ou un alliage à base de cadmium. Il peut s'agir d'un alliage de cadmium et d'un métal choisi, par exemple, parmi Ni, Mn, Sn, Cu, Co, Fe ou un de leurs mélanges. De préférence, il s'agit d'un alliage à base de cadmium avec du nickel et/ou du cuivre. Les alliages de cadmium présentent d'excellents résultats pour les rendements et de faibles autodécharges.

Selon une autre variante, l'alliage peut aussi être un alliage à base de cadmium et d'étain. L'alliage comporte, avantageusement, un ou plusieurs autres métaux tels que Ni, Cu et/ou Mn. Il a été observé que les alliages binaires Sn-Cd présentent peu d'interactions interatomiques mais qu'en revanche, le cadmium et l'étain forment avec au moins l'un des autres métaux des phases solides très stables.

Selon une autre variante, l'alliage est un alliage à base de cuivre et d'un ou plusieurs métaux choisis, par exemple, parmi Zn, Cd, Ni, Mn et Sn. De préférence, il s'agit d'un alliage à base de cuivre avec du zinc, de l'étain et/ou du cadmium.

Selon une autre variante, l'alliage est un alliage à base de nickel et d'un ou plusieurs métaux choisis, par exemple, parmi Sn, Cd et Zn. Les alliages de nickel se déposent facilement, contrairement au nickel pur, avec de bons rendements. En particulier, le nickel associé à du cadmium forme une phase intermétallique stable Cd₅Ni.

Selon une autre variante, l'alliage est un alliage à base de manganèse et d'un ou plusieurs métaux choisis, par exemple, parmi Sn, Cd et Zn.

Le nickel et le manganèse peuvent être co-déposés facilement en présence de zinc, de cadmium ou d'étain, par exemple sous la forme d'intermétallique Ni₃Sn ou MnSn₂.

Selon une variante, le matériau actif comprend l'un et/ou l'autre du nickel et du manganèse. Le nickel et le manganèse permettent chacun de rendre le dépôt du matériau actif plus consistant et par voie de conséquence limiter la formation de dendrites.

Par ailleurs, ces éléments, moins réactifs chimiquement que d'autres éléments, permettent de limiter l'auto décharge de la cellule électrochimique.

Les matériaux actifs d'électrode, obtenus à partir d'alliages métalliques, plutôt que de métaux seuls, forment des dépôts cohérents et donc les cellules électrochimiques ont de plus fortes capacités.

Il est possible d'avoir un alliage à base de cadmium, un alliage à base de cuivre ou un alliage à base de cadmium et à base d'étain contenant du zinc. Cependant, l'utilisation de zinc peut conduire à la formation d'un dépôt pyrophorique, ce qui oblige à travailler à une faible densité de courant (par exemple inférieure à 200A/m²) pour avoir un rendement énergétique correct.

Les alliages sont, de préférence, dépourvus de zinc. Ils sont, de préférence, dépourvus de plomb.

Les matériaux actifs sélectionnés ont de fortes capacités énergétiques. Par capacité énergétique, aussi appelée capacité d'énergie ou simplement capacité, on entend la quantité d'énergie électrique qu'un élément est capable de restituer après avoir reçu une charge complète. A titre d'exemple, une électrode négative, ayant une surface de 1dm² environ et de 3mm d'épaisseur, représente une capacité énergétique de 418Wh pour Cu, 332Wh pour Cd, 250Wh pour Sn, 540Wh pour Mn et 574Wh pour Ni. Par exemple, un alliage de zinc contenant 10% massique de cuivre présente une capacité de 2,65J/g contre 2,44J/g pour le zinc seul.

L'énergie spécifique, ou quantité d'énergie massique, de la cellule est fonction du matériau actif déposé et de la quantité de matériau déposé. Par exemple, pour du cadmium, elle est de 1,1 à 1,3Wh/g de cadmium déposé.

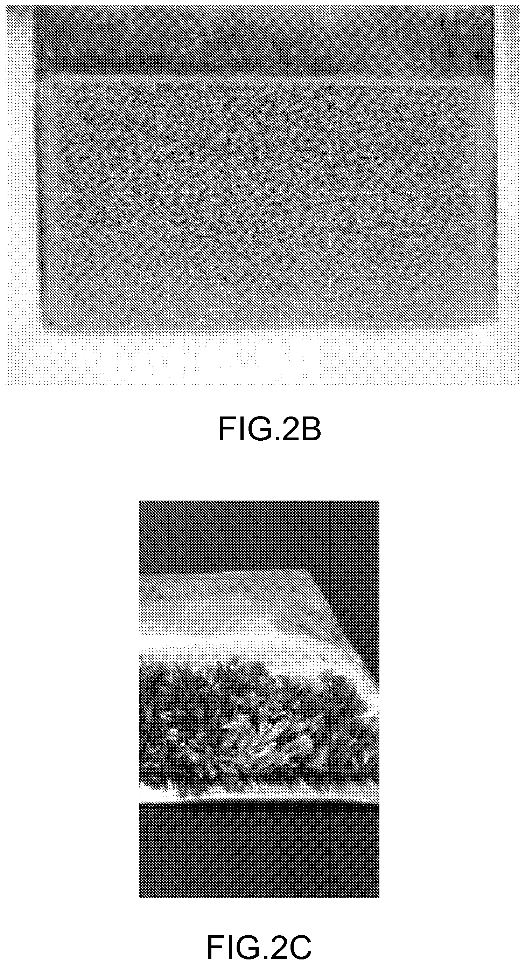

Avantageusement, de telles électrodes négatives peuvent être formées «in situ», lors de la charge. Il est possible de codéposer le nickel, le cuivre et le manganèse dans des matrices de cadmium, d'un alliage de cadmium, d'un alliage d'étain ou d'un alliage Cd-Sn. Le matériau actif de l'électrode négative peut être formé par codéposition (dépôt simultané de différents métaux) ou par dépôts successifs de différents métaux lors de la charge. Les électrodes négatives ainsi formées présentent, avantageusement, une bonne conduction ainsi qu'une bonne tenue mécanique. Les dépôts obtenus sont homogènes. Les figures 2a et 2b montrent que les dépôts d'alliage Cd/Cu et Cd/Pb sont homogènes. La circulation de l'électrolyte lors du dépôt favorise l'obtention d'un dépôt lisse. La figure 2c représente du cadmium déposé lors d'une charge de 14h à 1,6A/dm² avec un tensio- actif.

### Couples d'électrodes positive et négative :

L'électrode positive et l'électrode négative d'une même cellule électrochimique 2 forment un couple d'électrodes. Les électrodes des différentes cellules élémentaires 2 sont, avantageusement, identiques. De manière avantageuse, on associera une électrode positive en PbO₂/Pb ou de formule PbₓSn_{y}O_{z}, à une électrode négative en cadmium, en cuivre, ou en alliage à base de cadmium, ou en alliage à base de cadmium-étain. Un couple électrochimique avec une tension standard allant de 1,2V à 2,3V, voire de 1,2V à 2,6V, est obtenu.

De manière avantageuse, la capacité d'énergie de l'électrode négative et la capacité d'énergie de l'électrode positive sont similaires, c'est-à-dire que la quantité de métal sur l'électrode négative est telle que l'énergie que représente ce métal est du même ordre de grandeur que l'énergie portée par la quantité de métal de l'électrode positive. Par exemple, pour du cuivre ou un alliage à base de cuivre, le rapport massique entre la masse de matériau actif de l'électrode positive et la masse de matériau actif de l'électrode négative va de 3 à 6, et de préférence, de 3,5 à 5. Par exemple, pour du cadmium, un alliage à base de cadmium, ou un alliage à base d'étain et de cadmium, en terme de rapport massique, le rapport massique entre la masse de matériau actif de l'électrode positive et la masse de matériau actif de l'électrode négative va de 1,5 à 3, et de préférence, de 2 à 2,5. A titre d'exemple, dans le cas du système PbO₂+Cd, pour 112,4 g de cadmium, il faut au moins 239g de PbO₂/Pb, soit un rapport massique de 2,1 environ. L'électrode positive aura, avantageusement, une grande surface active, par exemple, en étant sous une forme dispersée.

Selon une variante, il sera avantageux de calibrer la cellule de telle sorte que la capacité énergétique en matériau actif de l'électrode négative soit déficitaire par rapport à la capacité énergétique de l'électrode positive. Il est ainsi possible de protéger cette dernière. Par exemple, on utilisera une électrode positive ayant une capacité d'énergie supérieure à celle de l'électrode négative. Elle sera, par exemple, supérieure de 5 % à 20 %, et de préférence de 10 % à 20 %. On évitera ainsi de décharger fortement la cellule électrochimique 1 au plomb. Les décharges profondes peuvent, en effet, provoquer des dommages irréversibles dans un système électrochimique avec du plomb.

Ces générateurs électrochimiques peuvent, avantageusement, être utilisés à des températures supérieures à la température ambiante, c'est-à-dire à des températures supérieures à 20-25°C et jusqu'à 70°C par exemple. Leurs performances ne sont pas diminuées dans la gamme de température de 20°C à 70°C. Par exemple, pour une température de 60°C, il n'y a au maximum que 20 à 30 % de sulfatation (formation de sulfate de plomb).

La protection de l'électrode positive par une charge excédentaire de matériau actif et le dépôt sur l'électrode négative de Cadmium ou d'un alliage permettent avec un strict minimum de sulfatation réversible à l'électrode positive. Cet permet de prolonger la durée de vie de la cellule.

Ces générateurs électrochimiques rechargeables présentent une bonne cyclabilité, la capacité de charge étant sensiblement constante au cours des cycles.

### Procédé de charge de la cellule électrochimique :

Le procédé de charge ou de préparation de la cellule électrochimique comprend au moins les étapes successives suivantes :
- fourniture d'une cellule électrochimique 2 non chargée comprenant une électrode positive comprenant un matériau actif à base de plomb, un support d'électrode négative,
- remplissage de la cellule électrochimique 2 avec un électrolyte aqueux,
- réalisation de la charge de la cellule électrochimique 2, par exemple en appliquant une intensité de charge entre les électrodes, de manière à électro-déposer le matériau actif sur le support de l'électrode négative et à former de l'acide sulfurique.

Au début de la charge, l'électrolyte aqueux, ou solution électrolytique, comprend des sulfates du métal ou des différents métaux formant l'alliage du matériau actif de l'électrode négative, de l'eau, éventuellement de l'acide sulfurique, et éventuellement des additifs en faible concentration (inférieure à 10 % massique de la concentration en métal). L'additif peut, par exemple être du sulfate de lithium pour améliorer la conductivité, ou encore un tensio-actif.

De manière avantageuse, au début de la charge, l'électrolyte comprend de 0 à 150g/L, et de préférence, de 0 à 50g/L, et encore plus préférentiellement de 40 à 50g/L d'acide sulfurique, et plus de 50g/L de métal à déposer, par exemple de 50 à 400g/L de métal à déposer. L'électrolyte pourrait être dépourvu d'acide sulfurique. De manière avantageuse, pour avoir une bonne conductivité, l'électrolyte comprend de l'acide sulfurique.

Selon un premier mode de réalisation, lorsque le matériau actif de l'électrode négative est du cuivre ou un alliage de cuivre, au début de la charge, l'électrolyte comprend de 50 à 100g/L de cuivre dissous en solution.

Selon un second mode de réalisation, le matériau actif de l'électrode négative est du cadmium, un alliage à base de cadmium, ou un alliage à base de cadmium et d'étain. La concentration en matériau actif dissous est supérieure ou égale à 100g/L. Elle est, de préférence, supérieure à 150g/L, plus préférentiellement supérieure à 200g/L et encore plus préférentiellement supérieure ou égale à 220g/L. Elle est encore plus préférentiellement supérieure ou égale à 250g/L. Par exemple, pour du cadmium, l'électrolyte peut comprendre de 300 à 380g/L de métal à déposer, et de préférence de 350g/L à 380g/L de cadmium.

La composition de l'électrolyte va varier graduellement au cours de la charge : la concentration en sulfate de métal, dans l'électrolyte, va diminuer progressivement au fur et à mesure de l'électro-déposition du matériau actif sur l'électrode négative pendant que la concentration en acide sulfurique va augmenter. Il est possible de changer d'électrolyte entre la charge et la décharge. Selon une variante, l'électrolyte ayant servi à la charge sera réutilisé lors de la décharge.

Il a été observé que la cellule, une fois chargée, présente une faible autodécharge. Par autodécharge, on entend la réaction électrochimique qui provoque une réduction progressive et indésirable du niveau de charge de la cellule lorsqu'elle n'est pas sollicitée. L'autodécharge est quantifiée en perte de masse de l'électrode négative, et plus particulièrement en perte de masse du matériau actif de l'électrode négative, en présence de la solution électrolytique, lorsque la cellule ne fonctionne pas. L'autodécharge correspond à la dissolution non désirée de l'électrode négative. Par faible autodécharge, on entend une autodécharge inférieure à 1 % massique, et de préférence inférieure à 0,5 % massique, et encore plus préférentiellement inférieure à 0,05 % massique. Contrairement au couple PbO₂/Pb+Zn, l'autodécharge des couples d'électrodes de la cellule de l'invention est négligeable. Par exemple, pour une électrode positive PbO₂/Pb associée à une électrode négative de cadmium sous la forme d'une plaque de 1mm d'épaisseur et de 1dm² de surface, dans un milieu sulfurique contenant 250g/L de H₂SO₄, la dissolution de l'électrode négative sur une durée de 24 heures représente 0,4 % de la masse initiale soit 0,35g pour 87g. Cette perte est, avantageusement, récupérée lors de la charge suivante de la cellule. Avec une électrode de cuivre de 32g, on a mesuré une perte de 0,0005g en 17 heures, ce qui représente moins de 0,002 % de la masse initiale. Pour un alliage de cadmium, tel que CdNi, ces valeurs sont de plus de dix fois plus faibles.

Les électrodes présentent une faible autodécharge, ce qui ne contraint pas l'utilisateur à mettre les électrodes au sec entre la charge et la décharge, ou durant les périodes où la cellule n'est pas utilisée. La cellule sera, avantageusement, utilisée dans des systèmes embarqués.

### Procédé de décharge de la cellule électrochimique :

Le procédé de décharge de la cellule électrochimique comprend au moins les étapes successives suivantes :
- fourniture de la cellule électrochimique chargée,
- remplissage de la cellule électrochimique par un électrolyte aqueux,
- décharge de la cellule électrochimique, le potentiel fourni par la cellule électrochimique lors de la décharge correspondant à celui du matériau actif de l'électrode négative, le matériau actif étant progressivement consommé lors de la décharge.

La cellule électrochimique chargée et l'électrolyte aqueux peuvent être vendus sous la forme d'un ensemble (« kit »). Avantageusement, l'électrolyte aqueux et la cellule électrochimique sont vendus séparément. L'utilisateur n'aura plus qu'à remplir la cellule électrochimique 2 avec l'électrolyte pour réaliser la première décharge.

La cellule électrochimique comprend une électrode positive et une électrode négative, l'électrode positive comprenant un matériau actif à base de plomb, l'électrode négative comprenant un support et un matériau actif, le matériau actif de l'électrode négative étant un métal choisi parmi le cuivre ou le cadmium ou un alliage choisi parmi un alliage à base de cuivre, un alliage à base de cadmium, ou un alliage à base de cadmium et d'étain.

Pour la décharge, l'électrolyte comprend de l'acide sulfurique, de l'eau, éventuellement des sulfates du métal ou des différents métaux formant le matériau actif de l'électrode négative, et éventuellement des additifs en faible concentration (inférieure à 10 % massique de la concentration en métal).

Plus particulièrement, l'électrolyte de la cellule électrochimique chargée comprend de 0 à 100g/L de métal dissous, et de préférence de 0 à 20g/L, sous la forme de sulfate du métal du matériau actif ou de sulfates des métaux formant l'alliage du matériau actif, et plus de 100g/L d'acide sulfurique. Au début de la décharge, le système électrochimique peut ne pas comprendre de métal dissous. Celui-ci se formera au fur et à mesure de la dissolution du matériau actif d'électrode.

Selon un premier mode de réalisation, lorsque le matériau actif est du cuivre, au début de la décharge, l'électrolyte comprend de 100 à 200g/L d'acide sulfurique, et de préférence, de 100 à 150g/L d'acide sulfurique.

Selon un second mode de réalisation, le matériau actif de l'électrode négative est du cadmium, un alliage à base de cadmium, un alliage à base de cadmium et d'étain. La concentration en acide sulfurique au début de la décharge est supérieure à 150g/L, de préférence supérieure à 200g/L et encore plus préférentiellement supérieure ou égale à 220g/L. De manière encore plus préférentielle, la concentration en acide sulfurique est de 220g/L à 400g/L, et encore plus préférentiellement supérieure ou égale à 300g/L. De manière encore plus préférentielle, la concentration en acide sulfurique va de 300 à 350g/L. Par exemple, pour une concentration de 400g/L, la capacité spécifique sera de 500Wh/L d'électrolyte.

Lors de la décharge, le matériau actif est attaqué par l'acide sulfurique. La composition de l'électrolyte va varier graduellement au cours de la décharge : la concentration en sulfate de métal, dans l'électrolyte, va augmenter progressivement au fur et à mesure de la dissolution du matériau actif de l'électrode négative, pendant que la concentration en acide sulfurique va diminuer. La teneur en acide peut être nulle à la fin de la décharge si les concentrations molaires en métal et en acide sont égales. Avantageusement, la concentration molaire d'acide sulfurique est au moins égale à celle de la solution métallique finale pour consommer toute l'électrode négative. Par exemple, pour une concentration molaire de 3,2mol/L de cadmium, on aura au moins 3,2mol/L d'acide. Avantageusement, pour avoir une bonne conductivité en solution en fin de décharge, on rajoute un excès d'acide, au moins 0,5mol/L d'excès. Par exemple, pour une concentration molaire de 3,2mol/L de cadmium, on opérera à 4mol/L d'acide sulfurique. Autrement dit, en termes de concentration massique, pour améliorer la conductivité, en fin de décharge, on conservera, avantageusement, une concentration en acide sulfurique de l'ordre de 40 à 50g/L.

A titre illustratif, lors du fonctionnement d'une cellule électrochimique 1 avec une électrode positive en PbO₂/Pb et une électrode négative en cadmium, le domaine opératoire peut varier de 43g/L (système déchargé) à 343g/L (système chargé) pour l'acide sulfurique et de 364g/L (système déchargé) à 20g/L (système chargé) pour le cadmium. Par exemple, dans ce domaine opératoire, la concentration maximale de cadmium peut être limitée à 300g/L et la concentration minimale d'acide peut être limitée à 40g/L. Ces valeurs correspondent à une température de 30°C.

Il a été observé que, lors de la décharge, le couple d'électrodes PbO₂/Pb+Cd forme plus d'oxyde de plomb que de sulfate de plomb. Par plus de, on entend au moins 50 % molaire. De manière avantageuse, plus de 70 % molaire de plomb sera transformé en oxyde de plomb. Par exemple, 78 % molaire de plomb a été transformé en oxyde. Pour le couple d'électrodes PbO₂/Pb +Cu, le plomb a été transformé à environ 72 % molaire en oxyde de plomb. En fonction des conditions opératoires, la formation de PbSO₄ peut être nulle. A titre de comparaison, pour le couple d'électrodes PbO₂/Pb+Zn, il se forme, en mole, plus de sulfate de plomb que d'oxyde de plomb lors de la décharge, soit environ 60 % de sulfate. Avec les électrodes à base de cadmium et/ou d'étain, les anodes sont peu ou pas sulfatées et les performances électrochimiques de la cellule électrochimique 1 sont améliorées par rapport au couple PbO₂/Pb+Zn.

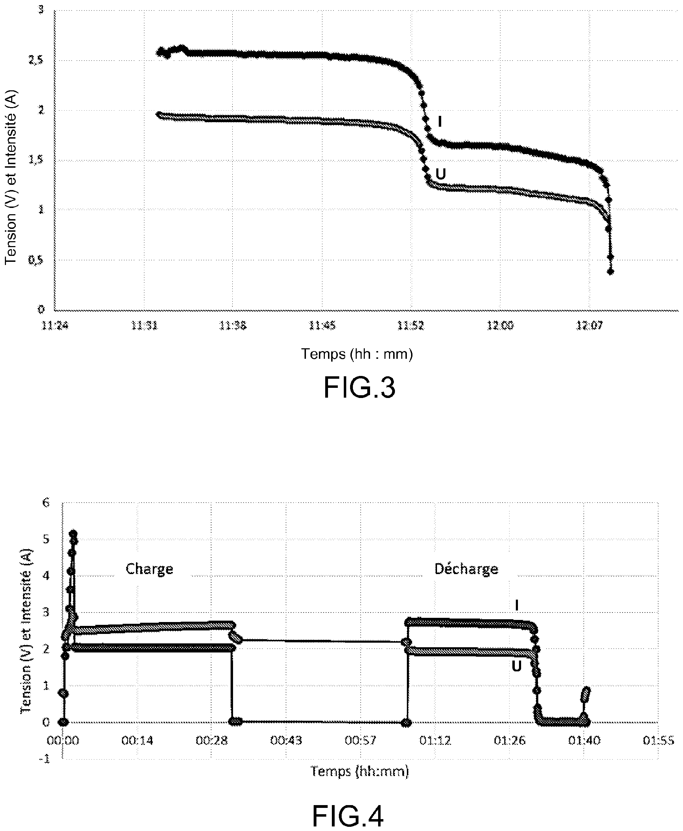

De manière avantageuse, le support de l'électrode négative de la cellule électrochimique est du cuivre, le matériau actif de l'électrode négative est du cadmium, un alliage à base de cadmium, ou un alliage à base de cadmium et d'étain. Au début de la décharge, le potentiel de la cellule électrochimique correspond à celui du matériau actif. Ce potentiel va diminuer lentement et progressivement lors de la décharge, de moins de 15 %. Lorsque, à la fin de la décharge le matériau actif est totalement consommé, on atteint le support d'électrode en cuivre. Le potentiel de la cellule électrochimique chute alors du potentiel du matériau actif de l'électrode négative au potentiel du cuivre. Cette chute brutale de potentiel est également appelée décrochage de potentiel. Il s'agit d'une chute de potentiel d'au moins 25 %, et de préférence d'au moins 30 %. Il est facile de savoir quand tout le matériau actif de l'électrode négative a été consommé. La courbe de la figure 3 représente, par exemple, la décharge pour une électrode négative comprenant un support en cuivre recouvert par du cadmium. Il y a un décrochage de potentiel d'environ 2V à 1,2V, lorsque tout le cadmium a été consommé et lorsque le support en cuivre est attaqué par l'acide sulfurique. La dissolution d'une partie du cuivre dans l'électrolyte ne provoque aucun dommage.

Une fois la batterie déchargée, elle peut être de nouveau chargée. Il est possible de changer d'électrolyte entre la décharge et la charge. Selon une variante, l'électrolyte ayant servi à la décharge sera réutilisé lors de la charge.

### Volume de l'électrolyte :

La capacité énergétique de la cellule électrochimique est limitée par la solubilité des espèces métalliques choisies pour former le matériau actif de l'électrode négative. Pour un volume d'électrolyte de 5L, il est possible de déposer au maximum 1 785g de Cd, 357g de Cu, 357g de Ni, 910g de Sn et 660g de Mn, ce qui correspond à des capacités d'énergie de 2280Wh pour Cd, 557Wh pour Cu, 768Wh pour Ni, 1065Wh pour Sn et 1600Wh pour Mn. En milieu sulfurique, le nickel et le manganèse sont déposés en tant qu'éléments dans un alliage contenant majoritairement du cuivre, du cadmium, de l'étain, ou du cadmium et de l'étain.

Le volume d'électrolyte sera, avantageusement, suffisant pour que le matériau actif de l'électrode négative se dissolve complètement dans l'électrolyte lors de la décharge. De manière avantageuse, lors de la charge, on utilisera un important volume d'électrolyte si le matériau actif est contenu dans l'électrolyte.

Avantageusement, on utilisera un ou deux réservoirs externes additionnels 3, 4 pour augmenter le volume d'électrolyte (figure 1). Chaque réservoir additionnel 3, 4 peut, avantageusement, contenir un volume d'électrolyte supérieur au volume des cellules élémentaires 2 du générateur 1. Avantageusement, le volume de chaque réservoir additionnel 3, 4 est au moins deux fois supérieur à celui des cellules élémentaires, et de préférence, au moins trois fois supérieur. Ce mode de réalisation est particulièrement avantageux dans le cas du cuivre. En effet, dans le cas du cadmium ou des alliages riches en cadmium, sans réservoir additionnel, on a des capacités spécifiques de l'ordre de 400 à 500 Wh/litre d'électrolyte avec une tension nominale de 2,2V. Avec le cuivre, on a une capacité spécifique de 110Wh/litre avec une tension nominale de 1,2V. Avec un réservoir additionnel 3, 4, d'un volume trois fois supérieur au volume de la cellule ou du volume de l'ensemble des cellules, il est possible de doubler la capacité, à condition que la masse des matériaux actifs sur les électrodes soit suffisante.

Les réservoirs additionnels 3, 4 peuvent être utilisés comme bacs de rétention. Lorsque la cellule n'est pas utilisée, il est possible de stocker tout l'électrolyte ou une partie de l'électrolyte dans l'un des réservoirs externes 3, 4. Même si la mise au sec des électrodes n'est pas nécessaire puisque l'autodécharge est très faible, il est possible de retirer l'électrolyte entre la charge et la décharge.

Avantageusement, les réservoirs externes 3, 4 sont en matériau chimiquement inerte vis-à-vis de l'électrolyte.

Il est possible d'avoir un ou plusieurs réservoirs additionnels et de fonctionner en mode statique, c'est-à-dire sans dispositif pour faire circuler l'électrolyte.

Selon une variante, le dispositif peut comprendre un dispositif de circulation pour faire circuler l'électrolyte entre les cellules électrochimiques 2. Il peut s'agir d'un dispositif de circulation pour faire circuler l'électrolyte au sein de la ou des cellules électrochimiques 2 et/ou entre les cellules électrochimiques 2 et le ou les réservoirs externes 3, 4. A titre illustratif, le dispositif de circulation peut être, par exemple, une pompe ou un système pneumatique. La circulation de l'électrolyte peut être utilisée pour favoriser les échanges, l'apport de réactifs au niveau des électrodes, elle joue un rôle important sur la morphologie du dépôt cathodique et elle évite la formation des dendrites. Les dépôts obtenus sont homogènes. On choisira, avantageusement, un écoulement laminaire le long des électrodes. Selon les conditions opératoires, on obtiendra soit un dépôt lisse soit un dépôt granuleux. Un dépôt granuleux, ayant une bonne tenue mécanique, est avantageux puisque la surface spécifique est plus grande.

De manière avantageuse, on utilisera la cellule électrochimique 2 avec un réservoir externe 3, 4 et un dispositif de circulation.

L'électrolyte peut, par exemple, circuler en boucle entre le réservoir additionnel 4 et la cellule 2 de manière à être renouvelé de manière continue. Il est également possible d'ajuster la composition de l'électrolyte au fur et à mesure par ajout d'acide sulfurique (décharge) ou par ajout de sulfate de métal (charge) dans l'un des réservoirs, par exemple.

Les deux réservoirs 3, 4 peuvent servir simultanément. Par exemple, lors de la décharge, les cellules électrochimiques 2 pourront être remplies au fur et à mesure de la dissolution du matériau actif, avec un électrolyte « neuf », riche en acide sulfurique, et, éventuellement comprenant des sulfates métalliques en quantités négligeables, provenant du premier réservoir externe 3. L'électrolyte avec le matériau actif dissous pourra être évacué au fur et à mesure vers l'autre réservoir externe 4. Le sens de circulation de l'électrolyte peut être inversé, allant du réservoir externe 4 jusqu'au réservoir externe 3, en passant par les cellules élémentaires 2.

Le ou les réservoirs additionnels peuvent servir pour la charge et/ou uniquement pour la décharge.

Avantageusement, le kit comprend la cellule électrochimique 2, au moins un réservoir externe 3, 4 et l'électrolyte. Ce dernier pourra être stocké dans un réservoir externe 3, 4 ou dans tout autre contenant de stockage adapté, par exemple un baril en matériau chimiquement inerte vis-à-vis de l'électrolyte.

Selon un autre mode de réalisation avantageux, la cellule électrochimique comporte un dispositif d'agitation.

De manière encore plus avantageuse, on choisira une cellule électrochimique comprenant un dispositif d'agitation et dépourvue de réservoir externe, notamment dans le cas où le matériau actif de l'électrode négative est un alliage à base de cuivre ou un alliage à base de cadmium.

### Exemples illustratifs et non limitatifs :

Plusieurs cellules électrochimiques 2 comprenant chacune une électrode du commerce en PbO₂/Pb et une électrode négative sont préparées et disposées en série. Le matériau actif de l'électrode négative est du cuivre, de l'étain, du cadmium, ou un alliage à base de cadmium, à base d'étain ou à base d'étain et de cadmium. Les électrodes sont distantes l'une de l'autre de 2 cm, leur surface est de 25 dm². Chaque cellule 2 comprend un compartiment en polyéthylène (PE) ou en polychlorure de vinyle (PVC) pouvant contenir un volume d'électrolyte de 5L environ. Un dispositif d'agitation peut être ajouté. Chaque cellule électrochimique 2 peut fonctionner de manière autonome. Les différentes cellules 2 peuvent être reliées en série. Les électrodes positives sont reliées entre elles par des languettes de plomb. Une tension globale de 24 volts est obtenue.

Les électrodes métalliques ont un volume de 750 cm³ et elles pèsent en moyenne 6 kg. Au cours de la décharge, le métal est attaqué par l'acide sulfurique et les électrodes sont réduites à 5 kg, libérant 1000g de métal en solution, ce qui correspond à environ 1300Wh. Chaque cellule électrochimique 2 est chargée entre 1000 et 1500Wh suivant la composition du matériau actif de l'électrode négative.

En associant cinquante de ces cellules électrochimiques 2 en série, on forme un module de 60kWh ayant une tension de 100 à 120 volts. En associant douze cellules électrochimiques 2, on a une capacité d'énergie au moins égale à 12kWh.

### Cellule électrochimique élémentaire PbO₂/Pb+CdCu :

La cellule électrochimique élémentaire 2 comprend une anode du commerce en dioxyde de Plomb sur un support de plomb (PbO₂/Pb), une cathode en Plomb (Pb) sur laquelle va être déposé le matériau actif, et un électrolyte contenant du sulfate de Cadmium (3CdSO₄, 8H₂O) et du sulfate de cuivre (CuSO₄, 5H₂O). La cellule est chargée à température ambiante (environ 25C°). Le dépôt d'alliage de cadmium et de cuivre est homogène et adhère bien à la surface de la cathode.

Les courbes représentant la variation de la tension et de l'intensité en fonction du temps pour la charge et la décharge d'une telle cellule sont données sur la figure 4.

### Cellule électrochimique élémentaire PbO₂/Pb+Cd :

La cellule électrochimique élémentaire 2 comprend une anode du commerce en dioxyde de Plomb sur un support de plomb (PbO₂/Pb), une cathode en Plomb (Pb) sur laquelle va être déposé le matériau actif, et un électrolyte contenant du sulfate de Cadmium (3CdSO₄, 8H₂O). La concentration initiale en cadmium est de 295g/L et celle en acide sulfurique est de 100 g/L. La cellule est chargée à température ambiante (environ 25C°) pendant 30 minutes à 2A/dm². Le dépôt de cadmium est homogène et adhère bien à la surface de la cathode. La concentration de l'électrolyte en acide sulfurique, à la fin de la charge, est de 300g/L et celle en cadmium est de 65g/L.

La cellule élémentaire 2 est ensuite déchargée dans une résistance de 0,47Ω jusqu'à la chute de tension correspondant à la dissolution du dépôt de Cd, ce qui correspond à environ 25 minutes de décharge.

La tension à vide avant la mise en route de la décharge est de 2,194 V et le rendement énergétique obtenu (charge/décharge) est de 81 %. Les différentes caractéristiques électriques sont données dans le tableau suivant :

| | I **(A) moy** | **U (V) moy** | **P (W)** | **temps (h)** | **E (Wh)** | **C (Ah)** |
|---|---|---|---|---|---|---|
| **Charge** | 2,04 | 2,59 | 5,27 | 0,50 | 2,64 | 1,02 |
| **Décharge** | 2,69 | 1,91 | 5,12 | 0,42 | 2,14 | 1,12 |

| | | | | | | |
|---|---|---|---|---|---|---|
| « I moy » correspond à l'intensité moyenne, et « U moy » correspond à la tension moyenne. | | | | | | |

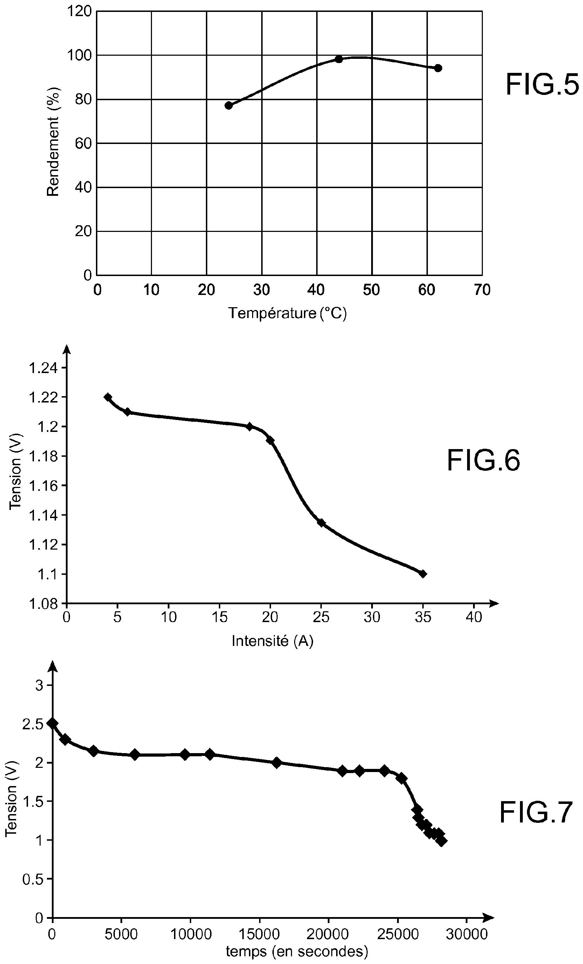

Des essais en température ont été réalisés avec cette cellule élémentaire. Différentes températures (44°C et 62°C) ont été testées dans les mêmes conditions de charge (30 minutes à 2A/dm²) et de décharge (utilisation d'une résistance de 0,47 Ω). Les résultats des essais, représentés sur la figure 5, mettent en évidence l'effet bénéfique de la température, avec un pic de rendement énergétique à 44°C.

A titre de comparaison, on a mesuré le rendement énergétique d'une cellule PbO₂/Pb+CdNi. Le rendement à 25°C est de 82%, ce qui est supérieur à celui obtenue pour une électrode négative en cadmium seul.

Ces essais ont également permis, par l'intermédiaire des courbes de polarisation, de mesurer la résistance de l'électrolyte en fonction de la température. Les valeurs obtenues montrent que la résistance la plus faible (0,0721 Ω) correspond à la température la plus haute (62°C). Plus la résistance est faible, plus la densité énergétique de la cellule est importante.

### Cellule électrochimique élémentaire PbO₂/Pb+CuCd :

La cellule élémentaire 2 comprend une anode du commerce en dioxyde de Plomb (PbO₂/Pb), une cathode en titane nitruré sur laquelle va être déposé le matériau actif. L'électrolyte contient du sulfate de cuivre (70g/L) et du sulfate de cadmium (5g/L) ainsi que de l'acide sulfurique.

La courbe représentant la tension de décharge en fonction de l'intensité est représentée sur la figure 6.

### Cellule électrochimique élémentaire PbO₂/Pb+CdNi :

La cellule élémentaire 2 comprend une anode du commerce en dioxyde de Plomb (PbO₂/Pb), une cathode en titane nitruré sur laquelle va être déposé le matériau actif. L'électrolyte contient du sulfate de cadmium (154 g/L) exprimé en Cd et du sulfate de nickel (20g/L) ainsi que de l'acide sulfurique (150g/L). Les électrodes sont séparées d'une distance de 4cm. La cellule est chargée à une température de 16°C pendant 40 minutes à 1A. La concentration de l'électrolyte en acide sulfurique, à la fin de la charge, est de 240g/L, celle en cadmium est de 52g/L et celle en nickel est de 8g/l.

La cellule 2 a été déchargée en branchant les électrodes sur une résistance de 0,5Ω. L'énergie fournie est de 2Wh et la densité de courant cathodique est de 400A/m².

La figure 7 représente la décharge en fonction du temps d'une cellule électrochimique ayant une électrode négative comprenant un alliage de cadmium avec 1% massique de nickel pour 50Wh.

Par mesure de la masse de cadmium déposée (1,5g), on a déterminé un rendement de la charge de 96 %.

L'alliage de cadmium a été entièrement dissous en 13 minutes avec une quantité d'énergie de 1,73Wh. Le rendement de la décharge est de 87 %. Globalement le rendement a été de 84 % pour l'obtention d'un alliage Cd-Ni à 8,1 % Ni. A titre de comparaison, il est de 81% pour du cadmium seul.

### Cellule électrochimique élémentaire PbO₂/Pb+CuNi :

La cellule élémentaire 2 comprend une anode du commerce en dioxyde de Plomb sur un support de plomb (PbO₂/Pb), une cathode en cuivre (Cu) sur laquelle va être déposé le matériau actif, et un électrolyte contenant du sulfate de cuivre, du sulfate de nickel et de l'acide sulfurique.

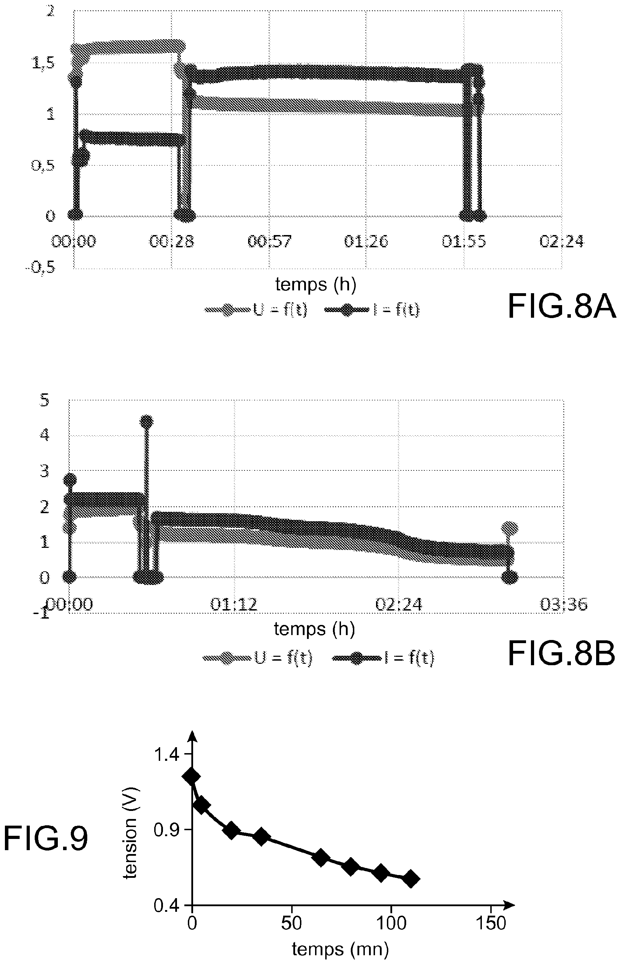

La cellule est chargée pendant 30 min à 0.7 A (soit environ 3.1 A/dm₂). Après la charge, on obtient un matériau actif contenant un alliage de cuivre avec 1% de nickel. La tension fournie lors de la décharge est stable (figure 8A).

A titre de comparaison, une cellule dont l'électrolyte contient uniquement du sulfate de cuivre et de l'acide sulfurique a été chargée également pendant 30 min à 3.1 A/dm². On observe que, lors de la décharge, la tension est moins stable au cours du temps (figure 8B).

La décharge de la cellule PbO₂/Pb+CuNi pour une charge de 5g/l de Ni est représentée sur la figure 9.

### Cellule électrochimique élémentaire PbO₂/Pb+Cu :

La cellule élémentaire 2 comprend une anode du commerce en dioxyde de Plomb sur un support de plomb (PbO₂/Pb), une cathode en cuivre (Cu) sur laquelle va être déposé le matériau actif, et un électrolyte contenant du sulfate de cuivre (CuSO₄, 5H₂O ; 60 g/L exprimé en Cu) et de l'acide sulfurique (50g/L).

La cellule 2 est chargée à température ambiante (environ 25C°) pendant 60 minutes à 3A/dm². Le dépôt de cadmium est homogène et adhère bien à la surface de la cathode. La concentration de l'électrolyte en acide sulfurique, à la fin de la charge, est de 125g/L et celle en cuivre est de 12g/L.

La cellule élémentaire 2 est ensuite déchargée dans une résistance de 0,47Ω. Après 120 minutes, la cellule n'était pas complétement déchargée. Une heure de décharge supplémentaire a été réalisée. Cependant, cette décharge supplémentaire a conduit à l'attaque du support en cuivre. Aucune chute de tension n'a donc été observée en fin de dissolution du dépôt.

La tension à vide avant la mise en route de la décharge est de 1,38 V et le rendement énergétique obtenu (charge/décharge) est de 59,2 %. Les différentes caractéristiques électriques sont données dans le tableau suivant.

Il est à noter que le rendement énergétique obtenu est légèrement surestimé à cause de l'attaque du support en cuivre.

| | **I (A) moy** | **U (V) moy** | **P (W)** | **temps (h)** | **E (Wh)** | **C (Ah)** |
|---|---|---|---|---|---|---|
| **Charge** | 3,70 | 1,96 | 7,26 | 1 | 7,26 | 3,70 |
| **Décharge 2h** | 1,44 | 1,06 | 1,53 | 2 | 3,07 | 2,88 |
| **Décharge +1h** | 1,38 | 1,04 | 1,43 | 3 | 4,30 | 4,15 |

| | | | | | | |
|---|---|---|---|---|---|---|
| « Décharge 2h » correspond à la première décharge de 2h. « Décharge +1h » correspond à la décharge de 1h, réalisée successivement à la décharge de 2h. | | | | | | |

### Comparaison de la charge de cellule électrochimique élémentaire PbO₂/Pb+Cd et PbO₂/Pb+CdNi :

Les cellules élémentaires 2 comprennent une anode du commerce en dioxyde de Plomb sur un support de plomb (PbO₂/Pb), une cathode en cuivre (Cu) sur laquelle va être déposé le matériau actif, et un électrolyte contenant des sulfates métalliques et de l'acide sulfurique.

Les cellules 2 sont chargées à température ambiante (environ 25C°) selon les paramètres donnés dans le tableau suivant. RF représente le rendement faradique et RW le rendement énergétique. Pour des intensités et des concentrations similaires, les rendements énergétiques et faradiques sont meilleurs quand le cadmium est déposé avec du nickel.

| | | | | | | | | | |
|---|---|---|---|---|---|---|---|---|---|
| Intensité (A/m²) | 710 | 480 | 400 | 400 | 400 | 400 | 400 | 400 | 400 |
| H₂SO₄ (g/L) | 50 | 215 | 400 | 413 | 240 | 264 | 280 | 250 | 285 |
| Cd (g/L) | 200 | 200 | 200 | 200 | 155 | 126 | 105 | 145 | 103 |
| Ni (g/L) | | | | | 20 | 20 | 20 | 20 | 20 |
| RF | 85 | 91 | 100 | 100 | 100 | 93 | 96 | 100 | 100 |
| RW | 50 | 60 | 85 | 96 | 96 | 100 | 85 | 80 | 85 |

## Revendications

1. Cellule électrochimique (2) à l'état chargé comprenant une électrode positive, un électrolyte aqueux et une électrode négative, l'électrode positive comprenant un oxyde métallique, tel que l'oxyde de plomb ou l'oxyde d'étain, l'électrode négative comprenant un support et un matériau actif, **caractérisée en ce que** le matériau actif de l'électrode négative est un alliage de métaux choisi parmi un alliage à base de cuivre, un alliage à base de cadmium, un alliage à base de nickel, un alliage à base de manganèse ou un alliage à base de cadmium et d'étain,
et **en ce que** l'électrolyte comprend de l'acide sulfurique et un matériau actif dissous, sous la forme de sulfates des métaux formant l'alliage du matériau actif de l'électrode négative, la concentration en acide sulfurique étant supérieure à 100g/L, la concentration en matériau actif dissous allant de 0 à 400g/L, et de préférence de 0 à 200g/L.

2. Cellule électrochimique (2) selon la revendication 1, **caractérisée en ce que** les alliages comprennent, en outre, jusqu'à 10% massique d'un ou plusieurs éléments choisis parmi le nickel, le manganèse, le cuivre, le cobalt, le fer, le zinc, le cadmium, le plomb et l'étain.

3. Cellule électrochimique (2) selon l'une quelconque des revendications précédentes, **caractérisée en ce que** le matériau actif de l'électrode négative est un alliage à base de cadmium ou un alliage à base de cadmium et d'étain et **en ce que** la concentration en acide sulfurique est supérieure ou égale à 220g/L, et de préférence, supérieure ou égale à 300g/L en fin de charge.

4. Cellule électrochimique (2) selon la revendication 3, **caractérisée en ce que** le support de l'électrode négative comprend au moins un des éléments choisi parmi : cuivre, aluminium, titane, acier inoxydable.

5. Cellule électrochimique (2) selon l'une des revendications 3 et 4, **caractérisée en ce que** le rapport massique entre la masse de matériau actif de l'électrode positive et la masse de matériau actif de l'électrode négative va de 1,5 à 3, et de préférence, de 2 à 2,5.

6. Cellule électrochimique (2) selon l'une des revendications 1 et 2, **caractérisé en ce que** le matériau actif de l'électrode négative est un alliage à base de nickel ou un alliage à base de manganèse.

7. Cellule électrochimique (2) selon l'une quelconque des revendications précédentes, **caractérisée en ce qu'**elle comprend au moins un réservoir externe (3, 4) pour l'électrolyte.

8. Cellule électrochimique (2) selon la revendication précédente, **caractérisée en ce qu'**elle comprend un dispositif de circulation pour faire circuler l'électrolyte entre le réservoir externe (3, 4) et la cellule électrochimique (2).

9. Cellule électrochimique (2) selon l'une quelconque des revendications 1 à 8, **caractérisée en ce que** le matériau actif de l'électrode positive est de l'oxyde de plomb de formule PbₓSn_{y}O_{z}, avec x>0, y≥0 et z>0.

10. Cellule électrochimique (2) selon l'une quelconque des revendications 1 à 8, **caractérisée en ce que** le matériau actif de l'électrode positive est de l'oxyde d'étain.

11. Cellule électrochimique (2) selon l'une quelconque des revendications précédentes, **caractérisée en ce que** l'autodécharge de la cellule est inférieure à 1 % en masse du matériau actif de l'électrode négative sur une période de 24h, de préférence inférieure à 0,5 % en masse, et encore plus préférentiellement, inférieure à 0,05 % en masse.

12. Procédé de préparation d'une cellule électrochimique (2) chargée telle que définie dans l'une quelconque des revendications 1 à 11, **caractérisé en ce que** le procédé comprend au moins les étapes successives suivantes :
- fourniture d'une cellule électrochimique (2) non chargée comprenant une électrode positive comprenant un matériau actif à base de plomb, et un support d'électrode négative,
- remplissage de la cellule électrochimique (2) avec un électrolyte aqueux comprenant de l'acide sulfurique et le matériau actif de l'électrode négative dissous, sous forme de sulfate, la concentration en acide sulfurique allant de 0 à 150g/L, de préférence de 0 à 50g/L, et encore plus préférentiellement de 40 à 50g/L, la concentration en matériau actif dissous étant supérieure à 50g/L, le matériau actif de l'électrode négative étant un alliage de métaux choisi parmi un alliage à base de cuivre, un alliage à base de cadmium, un alliage à base de nickel, un alliage à base de manganèse ou un alliage à base de cadmium et d'étain,
réalisation de la charge de la cellule électrochimique (2), par exemple en appliquant une intensité de charge entre les électrodes positive et négative, de manière à électro-déposer le matériau actif sur le support de l'électrode négative et à former de l'acide sulfurique.

13. Procédé de charge selon la revendication précédente, **caractérisé en ce que** le matériau actif de l'électrode négative est un alliage à base de cadmium ou un alliage à base de cadmium et d'étain et **en ce que** la concentration en matériau actif dissous est supérieure à 150g/L, de préférence supérieure à 200g/L et encore plus préférentiellement supérieure ou égale à 250g/L.

14. Procédé de décharge d'une cellule électrochimique (2) chargée telle que définie dans l'une quelconque des revendications 1 à 11, le procédé comprenant au moins les étapes successives suivantes :
- fourniture de la cellule électrochimique chargée, et de l'électrolyte tel que défini dans la revendication 1, le support de l'électrode négative étant du cuivre, le matériau actif de l'électrode négative étant un alliage de métaux choisi parmi un alliage à base de cuivre, un alliage à base de cadmium, un alliage à base de nickel, un alliage à base de manganèse ou un alliage à base de cadmium et d'étain,
- décharge de la cellule électrochimique (2), le potentiel fourni par la cellule électrochimique lors de la décharge correspondant à celui du matériau actif de l'électrode négative, le matériau actif étant progressivement consommé lors de la décharge,
et à la fin de la décharge, le matériau actif étant totalement consommé, le potentiel de la cellule électrochimique (2) chute du potentiel du matériau actif de l'électrode négative au potentiel du cuivre.

15. Ensemble comprenant un électrolyte aqueux et une cellule électrochimique (2) à l'état chargé, tels que définis dans l'une quelconque des revendications 1 à 11.

## Patentansprüche

1. Elektrochemische Zelle (2) im geladenen Zustand, umfassend eine positive Elektrode, einen wässrigen Elektrolyten und eine negative Elektrode, wobei die positive Elektrode ein Metalloxid umfasst, wie Bleioxid oder Zinnoxid, wobei die negative Elektrode einen Träger und ein aktives Material umfasst, **dadurch gekennzeichnet, dass** das aktive Material der negativen Elektrode eine Metalllegierung ist, die aus einer Legierung auf Kupferbasis, einer Legierung auf Kadmiumbasis, einer Legierung auf Nickelbasis, einer Legierung auf Manganbasis oder einer Legierung auf Kadmium- und Zinnbasis ausgewählt ist,
und dass der Elektrolyt Schwefelsäure und ein gelöstes aktives Material in der Form von Metallsulfaten umfasst, die die Legierung des aktiven Materials der negativen Elektrode bilden, wobei die Konzentration der Schwefelsäure größer als 100 g/L ist, wobei die Konzentration des gelösten aktiven Materials von 0 bis 400 g/L und vorzugsweise von 0 bis 200 g/L reicht.

2. Elektrochemische Zelle (2) nach Anspruch 1, **dadurch gekennzeichnet, dass** die Legierungen weiterhin bis zu 10 Massen-% von einem oder mehreren Elementen umfassen, die aus Nickel, Mangan, Kupfer, Kobalt, Eisen, Zink, Kadmium, Blei und Zinn ausgewählt sind.

3. Elektrochemische Zelle (2) nach einem der vorhergehenden Ansprüche, **dadurch gekennzeichnet, dass** das aktive Material der negativen Elektrode eine Legierung auf Kadmiumbasis oder eine Legierung auf Kadmium- und Zinnbasis ist und dass die Konzentration der Schwefelsäure größer als oder gleich 220 g/L und vorzugsweise größer als oder gleich 300 g/L zum Abschluss des Ladens ist.

4. Elektrochemische Zelle (2) nach Anspruch 3, **dadurch gekennzeichnet, dass** der Träger der negativen Elektrode mindestens eines der Elemente umfasst, die ausgewählt sind aus: Kupfer, Aluminium, Titan, Edelstahl.

5. Elektrochemische Zelle (2) nach einem der Ansprüche 3 und 4, **dadurch gekennzeichnet, dass** das Massenverhältnis zwischen der Masse des aktiven Materials der positiven Elektrode und der Masse des aktiven Materials der negativen Elektrode von 1,5 bis 3 und vorzugsweise von 2 bis 2,5 reicht.

6. Elektrochemische Zelle (2) nach einem der Ansprüche 1 und 2, **dadurch gekennzeichnet, dass** das aktive Material der negativen Elektrode eine Legierung auf Nickelbasis oder eine Legierung auf Manganbasis ist.

7. Elektrochemische Zelle (2) nach einem der vorhergehenden Ansprüche, **dadurch gekennzeichnet, dass** sie mindestens ein externes Reservoir (3, 4) für den Elektrolyten umfasst.

8. Elektrochemische Zelle (2) nach dem vorhergehenden Anspruch, **dadurch gekennzeichnet, dass** sie eine Zirkulationsvorrichtung umfasst, um den Elektrolyten zwischen dem externen Reservoir (3, 4) und der elektrochemischen Zelle (2) zirkulieren zu lassen.

9. Elektrochemische Zelle (2) nach einem der Ansprüche 1 bis 8, **dadurch gekennzeichnet, dass** das aktive Material der positiven Elektrode Bleioxid der Formel PbₓSn_{y}O_{z} ist, wobei x > 0, y ≥ 0 und z > 0.

10. Elektrochemische Zelle (2) nach einem der Ansprüche 1 bis 8, **dadurch gekennzeichnet, dass** das aktive Material der positiven Elektrode Zinnoxid ist.

11. Elektrochemische Zelle (2) nach einem der vorhergehenden Ansprüche, **dadurch gekennzeichnet, dass** die Selbstentladung der Zelle kleiner als 1 Massen-% des aktiven Materials der negativen Elektrode in einem Zeitraum von 24 St, vorzugsweise kleiner als 0,5 Massen-% und noch mehr bevorzugt kleiner als 0,05 Massen-% ist.

12. Verfahren zur Herstellung einer geladenen elektrochemischen Zelle (2), wie in einem der Ansprüche 1 bis 11 definiert, **dadurch gekennzeichnet, dass** das Verfahren mindestens die folgenden sukzessiven Schritte umfasst:
- Bereitstellen einer ungeladenen elektrochemischen Zelle (2), umfassend eine positive Elektrode, umfassend ein aktives Material auf Bleibasis, und einen Träger einer negativen Elektrode,
- Füllen der elektrochemischen Zelle (2) mit einem wässrigen Elektrolyten, umfassend Schwefelsäure und das gelöste aktive Material der negativen Elektrode in der Form von Sulfat, wobei die Konzentration der Schwefelsäure von 0 bis 150 g/L, vorzugsweise von 0 bis 50 g/L und noch mehr bevorzugt von 40 bis 50 g/L reicht, wobei die Konzentration des gelösten aktiven Materials größer als 50 g/L ist, wobei das aktive Material der negativen Elektrode eine Metalllegierung ist, die aus einer Legierung auf Kupferbasis, einer Legierung auf Kadmiumbasis, einer Legierung auf Nickelbasis, einer Legierung auf Manganbasis oder einer Legierung auf Kadmium- und Zinnbasis ausgewählt ist,
Umsetzen der Ladung der elektrochemischen Zelle (2), beispielsweise durch Anlegen eines Ladestroms zwischen der positiven und der negativen Elektrode, so dass das aktive Material auf dem Träger der negativen Elektrode elektrochemisch abgeschieden wird und die Schwefelsäure gebildet wird.

13. Ladeverfahren nach dem vorhergehenden Anspruch, **dadurch gekennzeichnet, dass** das aktive Material der negativen Elektrode eine Legierung auf Kadmiumbasis oder eine Legierung auf Kadmium- und Zinnbasis ist und dass die Konzentration des gelösten aktiven Materials größer als 150 g/L, vorzugsweise größer als 200 g/L und noch mehr bevorzugt größer als oder gleich 250 g/L ist.

14. Verfahren zur Entladung einer geladenen elektrochemischen Zelle (2), wie in einem der Ansprüche 1 bis 11 definiert, wobei das Verfahren mindestens die folgenden sukzessiven Schritte umfasst:
- Bereitstellen der geladenen elektrochemischen Zelle und des Elektrolyten wie in Anspruch 1 definiert, wobei der Träger der negativen Elektrode aus Kupfer ist, wobei das aktive Material der negativen Elektrode eine Metalllegierung ist, die aus einer Legierung auf Kupferbasis, einer Legierung auf Kadmiumbasis, einer Legierung auf Nickelbasis, einer Legierung auf Manganbasis oder einer Legierung auf Kadmium- und Zinnbasis ausgewählt ist,
- Entladen der elektrochemischen Zelle (2), wobei das von der elektrochemischen Zelle bereitgestellte Potential während der Entladung dem des aktiven Materials der negativen Elektrode entspricht, wobei das aktive Material während der Entladung allmählich verbraucht wird,
und wobei das aktive Material zum Abschluss der Entladung vollständig verbraucht ist, wobei das Potential der elektrochemischen Zelle (2) das Potential des aktiven Materials der negativen Elektrode auf das Potential des Kupfers senkt.

15. Einheit, umfassend einen wässrigen Elektrolyten und eine elektrochemische Zelle (2) im geladenen Zustand, wie in einem der Ansprüche 1 bis 11 definiert.

## Claims

1. Electrochemical cell (2) in a charged state comprising a positive electrode, an aqueous electrolyte and a negative electrode, the positive electrode comprising a metallic oxide, such as lead oxide or tin oxide, the negative electrode comprising a support and an active material, **characterized in that** the active material of the negative electrode is a metal alloy chosen among a copper based alloy, a cadmium based alloy, a nickel based alloy, a manganese based alloy or a cadmium and tin based alloy,
and **in that** the electrolyte comprises sulfuric acid and an active material dissolved, under the form of sulfates of metals forming the alloy of the active material of the negative electrode, the concentration in sulfuric acid being higher than 100g/L, the concentration in active material dissolved going from 0 to 400g/L, and preferably from 0 to 200g/L.

2. Electrochemical cell (2) according to claim 1, **characterized in that** the alloys further comprise, up to 10% mass of one or several elements chosen among nickel, manganese, copper, cobalt, iron, zinc, cadmium and tin.

3. Electrochemical cell (2) according to any of the previous claims, **characterized in that** the active material of the negative electrode is a cadmium based alloy, or a cadmium and tin based alloy and **in that** the concentration in sulfuric acid is higher or equal to 220g/L, and preferably, higher or equal to 300g/L at the end of the charge.

4. Electrochemical cell (2) according to claim 3, **characterized in that** the support of the negative electrode comprises at least one of the elements chosen among copper, aluminum, titanium, stainless steel.

5. Electrochemical cell (2) according to any one of the claims 3 and 4, **characterized in that** the mass ratio between the mass of the active material of the positive electrode and the mass of active material of the negative electrode goes from 1.5 to 3, and preferably, from 2 to 2.5.

6. Electrochemical cell (2) according to one of the claims 1 and 2, **characterized in that** the active material of the negative electrode is a nickel based alloy or a manganese based alloy.

7. Electrochemical cell (2) according to any one of the previous claims, **characterized in that** it comprises at least an external tank (3, 4) for the electrolyte.

8. Electrochemical cell (2) according to the preceding claim, characterized it comprises a circulation device to allow the circulation of the electrolyte between the external tank (3, 4) and the electrochemical cell (2).

9. Electrochemical cell (2) according to anyone of the claims 1 to 8, **characterized in that** the active material of the positive electrode is lead oxide of PbₓSn_{y}O_{z} formula with x>0, y≥0 and z>0.

10. Electrochemical cell (2) according to anyone of the claims 1 to 8, **characterized in that** the active material of the positive electrode is tin oxide.

11. Electrochemical cell (2) according to anyone of the previous claims, **characterized in that** the self-discharge of the cell is less than 1% in mass of active material of the negative electrode during a 24h period, preferably less than 0.5 % in mass, et more preferably, less than 0.05 % in mass.

12. Method for preparing a charged electrochemical cell (2) as defined in any one of the claims 1 to 11, **characterized in that** the method comprises at least the following successive steps:
- supplying of a non-charged electrochemical cell (2) comprising a positive electrode comprising a lead based active material, and a support of negative electrode,
- filling of the electrochemical cell (2) with an aqueous electrolyte comprising sulfuric acid and the active material of the negative electrode dissolved, in the form of sulfate, the concentration in sulfuric acid going from Oto 150g/L, preferably from 0 to 50g/l, and more preferably from 40 to 50g/L, the concentration in dissolved active material being higher than 50g/L, the active material of the negative electrode being a metal alloy chosen among a copper based alloy, a cadmium based alloy, a nickel based alloy, a manganese based alloy or a cadmium and tin based alloy,
- charging the electrochemical cell (2), for example, by applying an intensity of charge between the positive and negative electrodes, in order to electro-deposit the active material on the support of the negative electrode and to form sulfuric acid.

13. Method according to the previous claim, **characterized in that** the active material of the negative electrode is a cadmium based alloy or a cadmium and tin based alloy and **in that** the concentration in dissolved active material is higher to 150g/L, preferably higher than 200g/L and more preferably higher or equal to 250g/L.

14. Method of discharging a charged electrochemical cell (2) as defined in any one the claims 1 to 11, the method comprising at least the following successive steps:
- supplying of the charged electrochemical cell and the electrolyte as defined in the claim 1, the support of negative electrode being copper, the active material of the negative electrode being an alloy of metals chosen among a copper based alloy, a cadmium based alloy, a nickel based alloy, a manganese based alloy or a cadmium and tin based alloy,
- discharging the electrochemical cell (2), the potential supplied by the electrochemical cell during the discharge corresponding to the one of the active material of the negative electrode, the active material being progressively consumed during the discharge,
and at the end of the discharge, the active material being fully consumed, the potential of the electrochemical cell (2) falls from the potential of the active material of the negative electrode to the potential of the copper.

15. Set comprising and aqueous electrolyte and an electrochemical cell (2) in a charged state, as defined in any one of the claims 1 to 11.
